Europäisches Patentamt

European Patent Office

Office européen des brevets

(19)

(11) Numéro de publication: **0 228 923**
**B1**

(12) # FASCICULE DE BREVET EUROPEEN

(45) Date de publication du fascicule du brevet:
**28.12.88**

(51) Int. Cl.⁴: **B 60 N 1/10**

(21) Numéro de dépôt: **86402409.6**

(22) Date de dépôt: **28.10.86**

(54) **Siège arrière transformable.**

(30) Priorité: **08.11.85 FR 8516579**

(43) Date de publication de la demande:
**15.07.87 Bulletin 87/29**

(45) Mention de la délivrance du brevet:
**28.12.88 Bulletin 88/52**

(84) Etats contractants désignés:
**AT BE CH DE ES GB IT LI LU NL SE**

(56) Documents cités:
**DE-B- 1 066 882**
**DE-C- 699 589**
**FR-A- 909 776**
**FR-A- 1 298 008**
**FR-A- 1 522 571**
**US-A- 3 140 114**
**US-A- 4 037 872**

(73) Titulaire: **ECIA - EQUIPEMENTS ET COMPOSANTS POUR L'INDUSTRIE AUTOMOBILE, F-25400 Audincourt (FR)**

(72) Inventeur: **Fourrey, François, 32, rue du Petit Chênois, F-25200 Montbeliard (FR)**
Inventeur: **Deley, Serge, 46, rue Charles de Gaulle, F-90500 Beaucourt (FR)**

(74) Mandataire: **Moncheny, Michel et al, c/o Cabinet Lavoix 2 Place d'Estienne d'Orves, F-75441 Paris Cedex 09 (FR)**

**Description**

Il est de plus en plus apprécié par les propriétaires d'automobile de pouvoir disposer d'un siège arrière susceptible d'être rabattu pour dégager un espace important de prolongement du coffre, et également de pouvoir transformer les sièges en couchette lors d'un voyage de nuit par exemple. Or, l'obtention d'une couchette dans un véhicule automobile est actuellement le résultat du basculement du dossier de l'un des sièges avant, en direction du siège arrière, ce qui réduit considérablement la place restant disponible et, en outre, nécessite des dispositifs particuliers pour la commande du basculement du dossier du siège avant et le repliage du siège arrière lorsqu'on désire disposer des deux possibilités.

La présente invention a pour but de permettre d'obtenir une couchette à l'intérieur d'un véhicule automobile, même sans déplacer le siège avant, par la seule manoeuvre d'un siège arrière qui peut à volonté être transformé en couchette ou être rabattu pour dégager l'espace arrière.

Cette invention a en effet pour objet un siège arrière transformable, qui comporte un pied arrière formé par un prolongement du dossier qui, grâce à des dispositifs escamotables, est d'une part retenu sur le plancher du véhicule et, d'autre part, assemblé de manière pivotante à l'assise du siège; un pied avant monté pivotant sur un point fixe du plancher et relié à l'extrémité du pied arrière par une biellette articulée à ses deux extrémités; et un dispositif escamotable monté sous l'assise pour assembler celle-ci à l'un ou l'autre des axes d'articulation de la biellette, selon la position angulaire du pied arrière et du dossier par rapport à l'assise et au plancher.

En position normale du siège, les trois dispositifs escamotables de retenue sont en position active, l'axe d'articulation de la biellette sur le pied avant étant retenu sous l'assise tandis que le pied arrière est rendu solidaire de cette dernière. La libération du pied arrière accompagnée du retrait de l'un ou l'autre des dispositifs escamotables permet, soit le rabattement du siège arrière contre le siège avant, soit son déplacement en position couchette. En effet, la libération de la liaison entre l'assise et le pied arrière permet de repousser l'assise et le dossier en position sensiblement verticale derrière le siège, tandis que la libération du pied avant retenu sous l'assise et la fixation du dispositif sur l'articulation entre la biellette et la partie inférieure du pied arrière, entraîne un basculement du dossier et un soulèvement de l'assise qui les placent dans le prolongement l'un de l'autre, en position sensiblement horizontale de couchette.

Selon une autre caractéristique de l'invention, le dossier est relié à l'assise par des biellettes articulées.

Par ailleurs, le pied avant se prolonge au-delà de son articulation sur la biellette de liaison et forme ainsi un appui pour l'avant de l'assise en position couchette.

La description ci-dessous d'un mode de réalisation donné à titre d'exemple non limitatif, et représenté aux dessins annexés, fera d'ailleurs ressortir les avantages et caractéristiques de l'invention.

Sur ces dessins:

la fig. 1 est une vue schématique de côté d'un siège transformable, selon l'invention, monté à l'intérieur d'un véhicule;

la fig. 2 est une vue de détail, à échelle agrandie, montrant le mécanisme de support du siège de la figure 1 dont le pied arrière est déverrouillé;

la fig. 3 est une vue, analogue à la figure 1, montrant le siège arrière en position rabattue;

la fig. 4 est une vue analogue à la figure 1, montrant le siège arrière en position couchette.

Comme le montrent les dessins, le siège selon l'invention comporte une assise 1 et un dossier 2 qui peuvent être déplacés l'un par rapport à l'autre. Le dossier 2 est prolongé à sa partie inférieure par un pied 4 formé, par exemple, par les extrémités des branches latérales de son armature. Le pied arrière 4 comporte, à son extrémité opposée au dossier 2, une encoche 6 destinée à venir s'emboîter sur un ergot 8 fixé sur le plancher du véhicule.

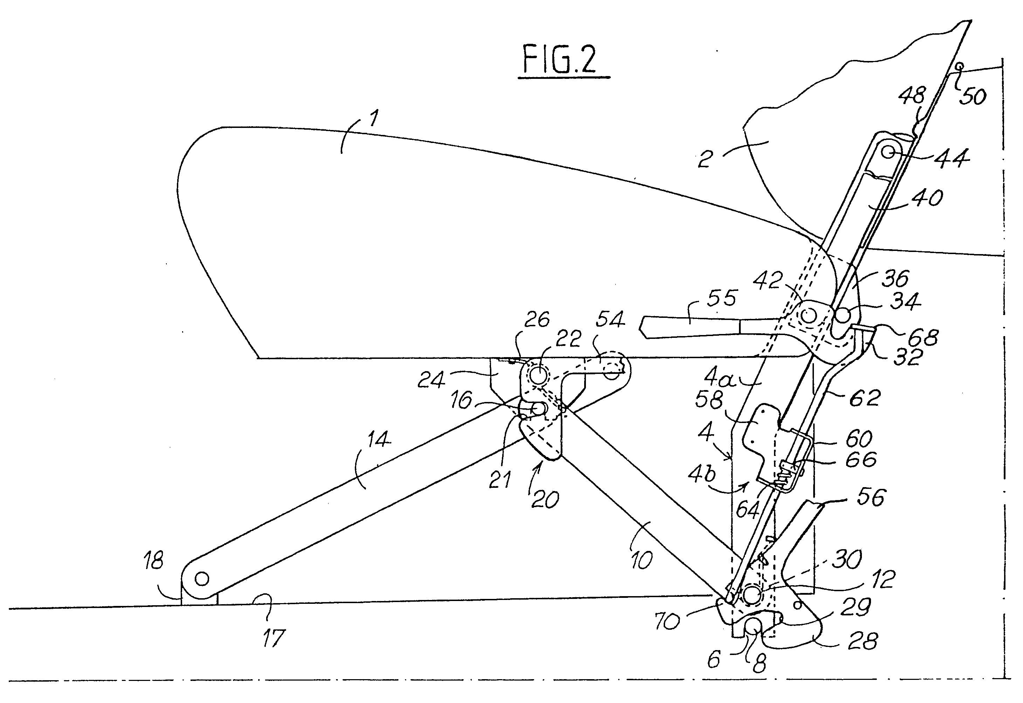

De préférence, comme représenté, le pied 4 comporte un bras 4a parallèle à la partie arrière du dossier, et un bras 4b formant un angle obtus avec le bras 4a, de façon à être sensiblement vertical dans la position normale du siège (fig. 2).

Au voisinage de son encoche 6, le bras 4 est articulé sur une biellette 10 au moyen d'un axe 12 et est ainsi relié à un pied avant 14, lui-même articulé autour d'un axe 16 sur l'extrémité opposée de la biellette de liaison 10. Le pied avant 14 est monté pivotant sur le plancher 17 du véhicule, par exemple au moyen d'une chape 18.

L'axe 16 d'articulation du pied avant 14 et de la biellette de liaison 10 est retenu contre l'assise 1 du siège au moyen d'un verrou 20 formé par un cliquet muni d'une encoche 21 et articulé sous l'assise 1 au moyen d'un axe 22 porté par une ferrure 24. L'encoche 21 a une dimension telle qu'elle s'emboîte facilement sur l'axe 16. Un ressort 26 tend d'ailleurs constamment à repousser le cliquet 20 en direction de cet axe.

De la même manière, un verrou 28 en forme de cliquet, muni d'une encoche 29, est monté pivotant sur l'axe 12 d'articulation de la biellette 10 sur le pied arrière 4, un ressort 30 rappelant constamment ce cliquet 28 en position de verrouillage, c'est-à-dire appliquant l'encoche 29 contre l'ergot 8.

Le pied arrière 4 solidaire du dossier 2, est par ailleurs assemblé à l'assise 1 par la coopération d'un verrou 32, en forme de cliquet, articulé sur l'assise, avec un ergot 34 porté par une plaque 36 solidaire du pied 4, un ressort — non visible sur la figure — repoussant le cliquet 32 en direction de cet axe.

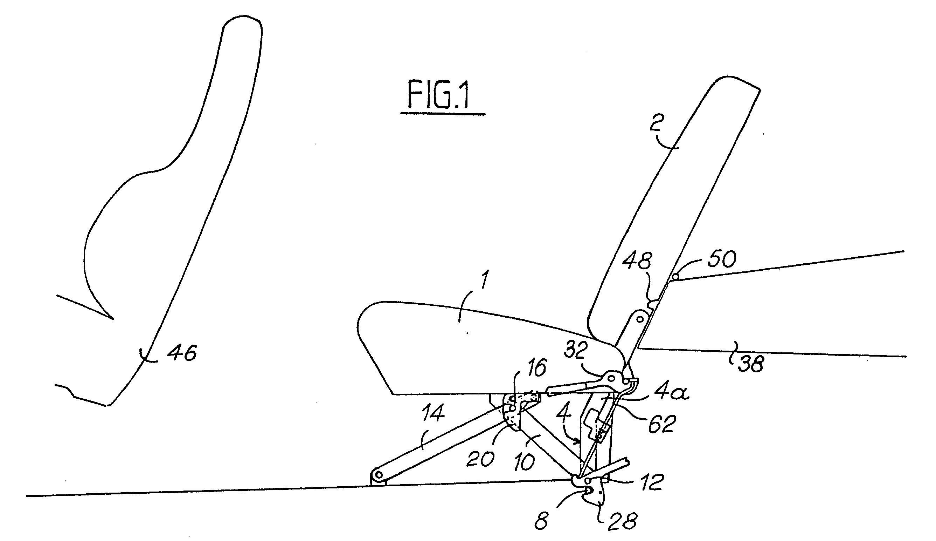

Lorsque les cliquets 20, 28 et 32 sont ainsi appliqués sur les axes ou ergots correspondants, l'assise et le dossier du siège sont maintenus dans une position déterminée et solidement supportés sur le plancher du véhicule. Le dossier 2 est de préférence, comme le montre la figure 1, parallèle à un élément de la carrosserie du véhicule, par exemple aux passages de roues, et même en appui à sa partie inférieure contre ces passages 38.

Le dossier 2 et l'assise 1 sont en outre reliés entre eux par des biellettes 40 articulées sur l'assise 1 autour de l'axe 42 d'articulation du cliquet 32, et sur le dossier 2 autour d'un axe 44 voisin de la partie arrière de ce dossier.

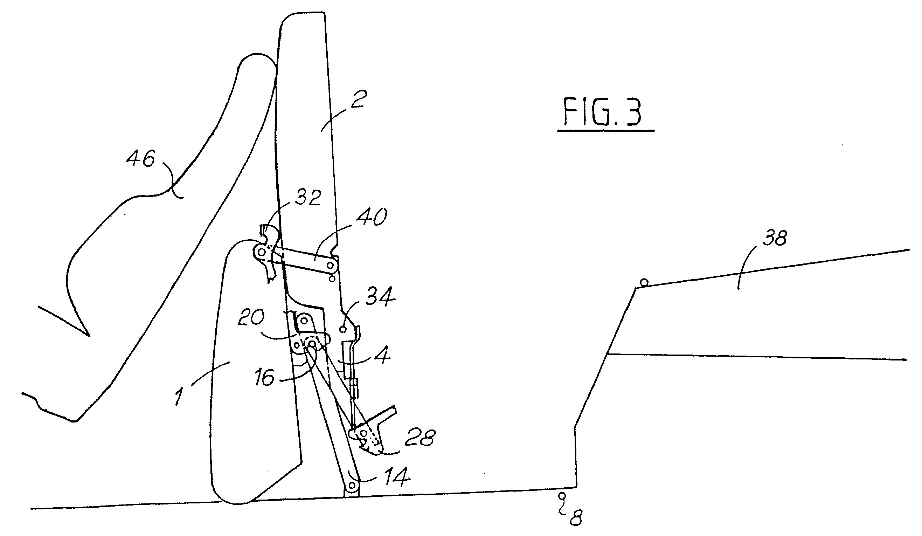

Si, comme représenté sur la figure 2, les cliquets 32 et 28 sont basculés pour être dégagés respectivement des ergots 34 et 8, le pied arrière 4 est libéré de l'assise 1. Le dossier 2 peut alors être repoussé vers l'avant en étant légèrement soulevé, de façon à redresser la partie arrière de l'assise et à provoquer le basculement de cette dernière autour de l'axe 16 d'articulation du pied avant et de la biellette. Le pied arrière 4 est repoussé en même temps que le dossier 2 et que l'assise 1, ainsi basculée en position sensiblement verticale, en direction du siège avant 46. Dans ce mouvement, l'ensemble articulé formé par le pied avant 14, la biellette 10 et le pied arrière 4, est replié sur lui-même de sorte que le dossier 2 se place parallèlement à l'assise 1, comme le montre la figure 3, les biellettes 40 maintenant d'ailleurs ces deux organes l'un contre l'autre. L'ensemble du siège est ainsi rabattu et dégage l'espace arrière qu'il occupait précédemment.

Un mouvement inverse est obtenu en tirant vers l'arrière le dossier 2 et en le soulevant légèrement de façon, à la fois à faire basculer l'assise vers sa position horizontale et à faire passer le cliquet 32 sous l'ergot 34 solidaire du pied arrière 4. Le système articulé se déploie à nouveau et lorsque l'encoche 6 du pied 4 se trouve en regard de lergot 8, le cliquet 32 s'emboîte à nouveau sur l'ergot 34 et l'ensemble reprend la position représentée sur la figure 1, les trois verrous étant à nouveau en position active.

Toutefois lorsqu'il est désiré d'utilisier le siège en tant que couchette, le verrou 28 est à nouveau escamoté pour libérer le pied 4 du plancher du véhicule. De même le verrou 20 est écarté contre l'action du ressort 26 pour libérer l'axe 16. Un effort est alors exercé pour soulever le dossier 2 légèrement, puis le faire pivoter par rapport à l'assise 1 autour de l'ergot 34 qui, bien qu'emboîté dans le cliquet 32, constitue à ce moment un axe d'articulation entre le dossier et l'assise.

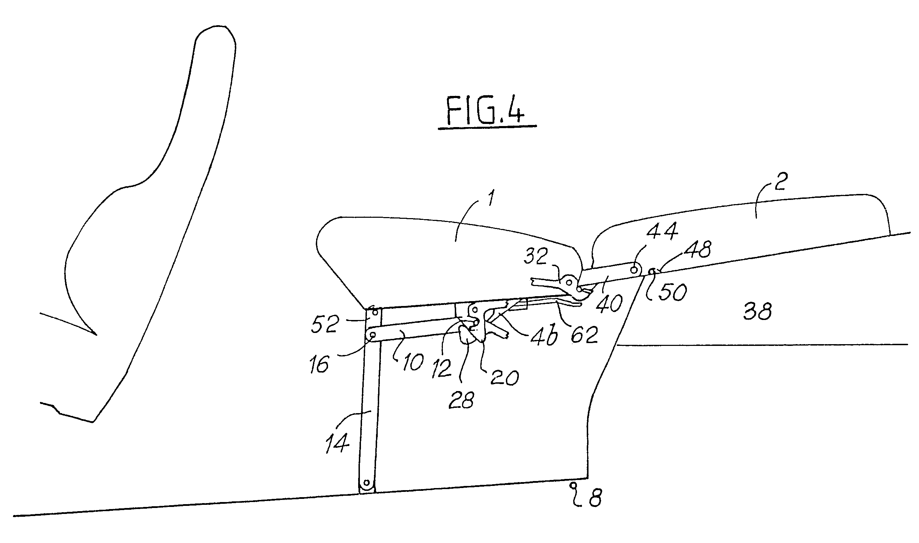

De préférence, pour faciliter cette manoeuvre, la partie arrière du dossier 2 comporte une encoche 48 qui vient progressivement s'emboîter sur un ergot 50 monté à la partie supérieure du passage de roues, ou analogue. Le dossier 2 tourne alors autour de cet ergot 50, ce qui déplace le pied 4 jusqu'à ce que son bras supérieur 4a soit parallèle à la face inférieure de l'assise 1 et appuie contre celle-ci. L'axe 12 d'articulation du pied arrière 4 avec la biellette 10 est alors amené au droit du verrou 20 et emboîté dans l'encoche 21 de ce verrou, comme le montre la figure 4.

Ce déplacement du pied arrière 4, qui a entraîné un mouvement vers l'avant de la biellette 10, a provoqué également un pivotement du pied avant 14 autour de son axe d'articulation sur le plancher. Ce pied 14 se prolonge de préférence au-delà de son articulation 16 sur la biellette 10, et forme ainsi un support 52 pour la partie avant de l'assise 1, lorsque la biellette 10 a atteint une position sensiblement horizontale entre le verrou 20 et le pied avant 14. A ce moment le dossier 2 repose pratiquement sur les passages de roues 38 et se trouve dans le prolongement de l'assise 1, de sorte qu'ils forment une couchette dans la partie arrière du véhicule.

Cette couchette peut à tout moment être transformée par un simple déverrouillage du cliquet 20 et un pivotement en sens inverse du dossier 2 autour de l'ergot 50, ce qui fait redescendre le pied 4 en direction de l'ergot 8 du plancher. Au cours de cette descente, le pied 4 entraîne la biellette 10 qui fait pivoter le pied avant 14 jusqu'au moment où l'axe 16 retrouve sa place initiale représentée sur les figures 1 et 2. L'assise 1 étant descendue au cours de ce pivotement, le verrou 20 peut à nouveau être bloqué sur l'axe 16.

Chacun des cliquets 20, 28 et 32 est muni d'une poignée de manoeuvre, respectivement 54, 55, 56, et peut ainsi être déplacé manuellement à volonté. Toutefois, selon un mode de réalisation préféré, le pied arrière 4 supporte une ferrure 58 qui forme un étrier 60 de support d'une tige 62 qui traverse l'étrier et est repoussée vers l'extérieur de celui-ci, en direction du cliquet 32, par un ressort 64 monté entre l'étrier et une bague 66 solidaire de la tige 62.

La tige 62 a une longueur telle que sous l'action de ce ressort elle vient en appui contre un talon 68 du cliquet 32 et que, de l'autre côté de l'étrier 60, elle se termine à proximité d'un crochet 70 du cliquet 28.

En position normale du siège, c'est-à-dire dans la position représentée sur la figure 1, la tige 62 n'est pas en contact avec le crochet 70. Par contre, dès qu'on manoeuvre la poignée 55 du cliquet 32 pour écarter celui-ci de l'ergot 34, la tige 62 est repoussée contre le crochet 70 et agit ainsi sur le cliquet 28 qu'elle écarte de l'ergot 8. Une seule manoeuvre suffit ainsi pour dégager entièrement le pied arrière 4.

De la même manière, le verrou 20 et le verrou 28 pourraient être reliés entre eux de façon que la manoeuvre de la poignée 54 du verrou 20 provoque simultanément le déverrouillage du cliquet 28. On obtient ainsi une commande particulièrement simple des déplacements des différentes parties du siège et de la transformation de ce siège selon l'utilisation désirée.

Bien entendu, ce siège arrière peut être constitué par une banquette occupant la totalité de la largeur du véhicule et en appui contre les deux passages de roues de ce véhicule, ou constituer simplement un siège individuel qui, en position couchette, reposera seulement sur l'un des passages de roues, une béquille, ou tout autre organe analogue, étant ajoutée pour assurer un support suffisamment efficace.

De même, la couchette peut, si désiré, être complétée ou plus exactement prolongée par le siège avant en basculant vers l'arrière le dos de ce dernier de la manière habituelle.

## Revendications

1. Siège arrière transformable pour véhicule automobile, ou analogue, caractérisé en ce qu'il comporte un pied arrière (4) formé par un prolongement du dossier (2) qui, grâce à des dispositifs escamotables (28, 32), est, d'une part, fixé au plancher du véhicule et, d'autre part, assemblé de manière pivotante à l'assise (1) du siège, un pied avant (14) monté pivotant sur un point fixe (18) du plancher du véhicule et relié à l'extrémité du pied arrière (4) par une biellette (10) articulée à ses deux extrémités, et un dispositif escamotable (20) monté sur l'assise (1) pour assembler celle-ci à l'un ou l'autre des axes d'articulation (16, 12) de la biellette (10) selon la position angulaire du pied avant (14) et du dossier (2) par rapport à cette assise et au plancher.

2. Siège suivant la revendication 1, caractérisé en ce que l'assise (1) et le dossier (2) sont reliés entre eux par d'autres biellettes (40) articulées sur eux.

3. Siège suivant l'une des revendications 1 et 2, caractérisé en ce que le pied avant (14) se prolonge au-delà de son articulation avec la biellette de liaison (10) et forme ainsi un appui (52) pour l'avant de l'assise soulevé lorsque le dispositif escamotable (20), monté sur cette dernière, retient l'articulation opposée (12) de la biellette (10).

4. Siège suivant l'une des revendications précédentes, caractérisé en ce que chaque dispositif escamotable est constitué par un cliquet (20, 28, 32) comportant une encoche (21, 29) d'emboîtement sur une saillie de l'organe à assembler, un ressort (26, 30) repoussant ce cliquet en position active.

5. Siège suivant l'une des revendications précédentes, caractérisé en ce que le pied arrière (4), la biellette (10) et le pied avant (14) forment un système articulé susceptible d'être replié sur lui-même en vue du rapprochement, parallèlement l'un à l'autre, de l'assise (1) et du dossier (2).

6. Siège suivant l'une des revendications précédentes, caractérisé en ce que le pied arrière (4) est terminé par une encoche (16) d'emboîtement sur un ergot (8) solidaire du plancher.

7. Siège suivant l'une des revendications précédentes, caractérisé en ce que deux des dispositifs escamotables (32, 28) sont reliés entre eux par une tige (62) entraînée par le déplacement de déverrouillage de l'un d'eux et provoquant le déverrouilage de l'autre.

8. Siège suivant l'une des revendications précédentes, caractérisé en ce que chaque dispositif de verrouillage est muni d'une poignée (54, 55, 56) de commande de son déverrouillage.

9. Siège suivant l'une des revendications précédentes, caractérisé en ce que la partie arrière du dossier comporte une encoche (48) de coopération avec un ergot (50) porté par la carrosserie du véhicule et formant axe de pivotement lors du basculement du dossier de la position normale à la position horizontale.

**Patentansprüche**

1. Umwandelbarer Rücksitz für Kraftfahrzeuge oder dergleichen, gekennzeichnet durch ein hinteres Bein (4), das von einer Verlängerung der Rückenlehne (2) gebildet ist und durch Verriegelungsvorrichtungen (28, 32) einerseits am Fahrzeugboden befestigt ist und andererseits schwenkbar mit dem Sitzelement (1) des Sitzes verbunden ist, ein vorderes Bein (14), das an einem festen Punkt (18) des Fahrzeugbodens angelenkt ist und mit dem Ende des hinteren Beins (4) durch eine an ihren beiden Enden angelenkte Stange (10) verbunden ist, und eine an dem Sitzelement (1) befestigte Verriegelungsvorrichtung (20), die das Sitzelement je nach der Winkelstellung des vorderen Beins (14) und der Rückenlehne (2) bezüglich des Sitzelements und des Fahrzeugbodens mit einer der Gelenkachsen (16, 12) der Stange (10) verbindet.

2. Sitz nach Anspruch 1, dadurch gekennzeichnet, dass das Sitzelement (1) und die Rückenlehne (2) durch an ihnen angelenkte Stangen (40) miteinander verbunden sind.

3. Sitz nach einem der vorhergehenden Ansprüche, dadurch gekennzeichnet, dass das vordere Bein (14) über sein Gelenk mit der Stange (10) hinaus verlängert ist und ein Auflager (52) für den angehobenen vorderen Teil des Sitzelements bildet, wenn die an diesem befestigte Verriegelungsvorrichtung (20) das entgegengesetzte Gelenk (12) der Stange (10) verriegelt.

4. Sitz nach einem der vorhergehenden Ansprüche, dadurch gekennzeichnet, dass jede Verriegelungsvorrichtung aus einer Klinke (20, 28, 32) besteht, die eine Aussparung (21, 29) zur Aufnahme eines Vorsprungs des zu verriegelnden Elements besitzt und durch eine Feder (26, 30) in die aktive Stellung zurückgedrückt ist.

5. Sitz nach einem der vorhergehenden Ansprüche, dadurch gekennzeichnet, dass das hintere Bein (4), die Stange (10) und das vordere Bein (14) ein Gelenksystem bilden, das so zusammenklappbar ist, dass das Sitzelement (1) und die Rückenlehne (2) parallel zueinander zusammengelegt werden.

6. Sitz nach einem der vorhergehenden Ansprüche, dadurch gekennzeichnet, dass am Ende des hinteren Beins (4) eine Aussparung (6) vorgesehen ist, mit der ein am Boden befestigter Zapfen (8) in Eingriff kommen kann.

7. Sitz nach einem der vorhergehenden Ansprüche, dadurch gekennzeichnet, dass zwei Verriegelungsvorrichtungen (32, 28) durch eine Stange (62) miteinander verbunden sind, auf die die Entriegelungsbewegung einer der Verriegelungsvorrichtungen übertragen wird und die die Entriegelung der anderen bewirkt.

8. Sitz nach einem der vorhergehenden Ansprüche, dadurch gekennzeichnet, dass jede Verriegelungsvorrichtung mit einem Griff (54, 55, 56) versehen ist, mit dessen Hilfe sie entriegelbar ist.

9. Sitz nach einem der vorhergehenden Ansprüche, dadurch gekennzeichnet, dass auf der Rückseite der Rückenlehne eine Aussparung (48) vorgesehen ist, die mit einem an der Fahrzeugkarosserie befestigten Zapfen (50) zusammenwirkt, der bei der Verschwenkung der Rückenlehne aus der normalen Stellung in die horizontale Stellung eine Schwenkachse bildet.

**Claims**

1. A convertible rear seat for an automotive vehicle or the like, characterized in that it comprises: a rear support (4) formed by an extension of the backrest (2) which via retractable devices (28, 32) is on the one hand attached to the vehicle floor and on the other pivotably connected to the bottom (1) of the seat; a front support (14) mounted to pivot on a fixed point (18) on the vehicle floor and connected to the end of the rear support (4) via a rod (10) hinged at both ends; and a retractable device (20) mounted on the seat bottom (1) so as to connect the seat bottom to one or other of the hinges (16, 12) of the rod (10) in dependence on the angular position of the front support (14) and the back-rest (2) in relation ot the seat bottom and the floor.

2. A seat according to claim 1, characterized in that the seat bottom (1) and the back-rest (2) are interconneted via rods (40) hinged thereon.

3. A seat according to one of claims 1 and 2, characterized in that the front support (14) is extended beyond its hinging to the connecting rod (10) and thus forms a bearing (52) for the front of the lifted seat bottom when the retractable device (20) mounted thereon retains the opposite hinge (12) of the rod (10).

4. A seat according to any of the preceding claims, characterized in that each retractable device comprises a catch (20, 28, 32) comprising a notch (21, 29) for engaging with a projection of the member to be assembled, a spring (36, 30) urging the catch into the operative position.

5. A seat according to any of the preceding claims, characterized in that the rear support (4), the rod (10) and the front support (14) form a hinged system adapted to be folded on itself so as to bring the seat bottom (1) and the back-rest (2) towards one another in parallel.

6. A seat according to any of the preceding claims, characterized in that the rear support (4) terminates in a notch (6) engaging with a stud (8) connected to the floor.

7. A seat according to any of the preceding claims, characterized in that two of the retractable devices (32, 28) are interconnected via a rod (62) entrained by the unlocking displacement of one of such devices and causing the unlocking of the other.

8. A seat according to any of the preceding claims, characterized in that each locking device has a handle (54, 55, 56) for its unlocking.

9. A seat according to any of the preceding claims, characterized in that the rear portion of the back-rest comprises a notch (48) cooperating with a stud (50) borne by the vehicle bodywork and forming a pivot during the tilting of the back-rest out of the normal position and into the horizontal position.

FIG.1

FIG.2

EP 0 228 923 B1

FIG.3

FIG.4

EP 0 228 923 B1